# EUROPÄISCHE PATENTSCHRIFT

(11) **EP 4 301 122 B1**
(45) Veröffentlichungstag und Bekanntmachung des Hinweises auf die Patenterteilung: **23.07.2025**
(21) Anmeldenummer: 22708921.6
(22) Anmeldetag: 28.02.2022
(51) Int. Cl.: A01B 29/04, A01B 69/02

(54) **REIFEN FÜR EIN LANDWIRTSCHAFTLICHES SÄ- UND/ODER BODENBEARBEITUNGSGERÄT**
TIRE FOR AN AGRICULTURAL SOWING AND/OR SOIL-WORKING DEVICE
PNEU POUR DISPOSITIF AGRICOLE DE SEMIS ET/OU DE TRAVAIL DU SOL

(30) Priorität: 02.03.2021 DE 102021104938
(43) Veröffentlichungstag der Anmeldung: 10.01.2024
(73) Patentinhaber: Amazonen-Werke H. Dreyer SE & Co. KG, 49205 Hasbergen (DE)
(72) Erfinder: STIER, Roy, 26121 Oldenburg (DE); FELDHAUS, Werner, 27801 Dötlingen/Geveshausen (DE); NIENSTERMANN, Heinke, 26203 Wardenburg (DE)
(86) Internationale Anmeldenummer: PCT/EP2022/054908
(87) Internationale Veröffentlichungsnummer: WO 2022/184605

(56) Entgegenhaltungen:
- EP-A1- 1 810 560
- EP-A1- 1 972 467
- EP-A1- 2 269 431
- US-A1- 2008 318 747
- US-A1- 2020 120 852

## Beschreibung

Die Erfindung betrifft einen Reifen für ein landwirtschaftliches Sä- und/oder Bodenbearbeitungsgerät gemäß dem Oberbegriff des Patentanspruches 1 und ein landwirtschaftliches Sä- und/oder Bodenbearbeitungsgerät gemäß dem Oberbegriff des Patentanspruches 11.

Auf dem Gebiet der Landwirtschaft sind eine Vielzahl von Varianten gezogener, angebauter und/oder selbstfahrender Arbeitsgeräte bekannt. Hierzu zählen neben Sämaschinen, die dazu geeignet sind Verteilgut, insbesondere Saatgut und/oder Dünger, auf der landwirtschaftlichen Nutzfläche auszubringen, unter anderem auch Bodenbearbeitungsgeräte mittels denen der Ackerboden solcher Nutzflächen vor- und/oder nachbereitet werden kann. Darüber hinaus gehören hierzu auch Bestellkombinationen, bestehend aus einer Sämaschine und einem Bodenbearbeitungsgerät, welche dazu eingerichtet sind, die Verteilgutausbringung und die Ackerbodenbearbeitung und/oder -behandlung innerhalb eins Arbeitsgangs parallel auszuführen. Um die Nutzfläche, insbesondere den Ackerboden, entsprechend zu bearbeiten und/oder zu behandeln, insbesondere zu verdichten, weisen derartige landwirtschaftliche Arbeitsgeräte wenigstens einen hierfür geeigneten Reifen auf, wobei ein derartiger Reifen beispielsweise an einem dem Sä- und/oder Bodenbearbeitungsgerät zugeordneten Bodenbearbeitungswerkzeug und/oder an einem, insbesondere für eine Transportfahrt auf der Straße geeigneten, Fahrwerk angeordnet ist.

Ein hierfür beispielhafte Maschinengattung mit einem derartigen Reifen ist beispielsweise in der DE 10 2008 045 132 A1 beschrieben. Der hier beschriebene Reifen ist Teil einer Scharanordnung und ist nach Art einer nachlaufenden Tiefenführungs- und/oder Andruckrolle zum zumindest teilweisen Verdichten und/oder Andrücken des, insbesondere im Vorfeld aufgelockerten, Ackerbodens ausgeführt. In einem anderen Anwendungsgebiet, wie in der EP 2 005 810 A1 beschrieben, ist ein derartiger Reifen, insbesondere in einer Mehrzahl, an einer Walze angeordnet und dazu eingerichtet, den Ackerboden im Vorfeld, insbesondere vor dem Ausbringen des Verteilguts, in geeigneter Weise vorzubereiten. In einem weiteren anderen Anwendungsgebiet, welches in der DE 20 2010 016 667 U1 beschrieben ist, ist ein derartiger Reifen, insbesondere in einer Mehrzahl, an einer unterteilten Walze nach Art eines Reifenpackers angeordnet. Die in den genannten Anwendungsgebieten beschriebenen Reifen umfassen jeweils wenigstens eine in einer Lauf- bzw. Umfangsrichtung des Reifens abrollbaren, insbesondere umlaufende, Lauffläche und eine Mehrzahl von, insbesondere in radialer Richtung von der Lauffläche sich erstreckende, Stollenelemente. Die Stollenelemente sind zwischen zwei gegenüberliegenden seitlichen Enden, insbesondere Rändern, der Lauffläche und in Laufrichtung zumindest teilweise hintereinander angeordnet, wobei zumindest eines der Stollenelemente wenigstens einen Querabschnitt aufweist der im Wesentlichen quer, insbesondere schräg, zur Laufrichtung ausgebildet ist.

Aus der EP 2 269 431 A1 ist eine Walze für landwirtschaftliche und ähnliche Maschinen bekannt, die einen rohrförmigen Träger, der sich um eine Achse drehen kann, und eine Vielzahl von Halbhohlreifen, die um den rohrförmigen Träger angeordnet sind, umfasst. Dabei können die Laufflächen der Halbhohlreifen Stollen aufweisen.

Die US 2020/120852 A1 offenbart eine landwirtschaftliche Walze, die einen rohrförmigen Träger umfasst, um den Luftreifen angeordnet sind, dessen Laufflächen Stollen aufweisen können.

Die Erfindung der EP 1 972 467 A1 und EP 1 810 560 A1 beziehen sich auf Reifen, die insbesondere für landwirtschaftliche Geräte, insbesondere für Walzen, Verwendung finden. Dabei können entlang der Laufflächen der Reifen Stollen angeordnet sein.

Es hat sich gezeigt, dass derartig ausgeführte Reifen bisher unzureichend auf das beschriebene landwirtschaftliche Anwendungsgebiet abgestimmt sind. Ein mit den herkömmlichen Reifen bearbeiteter und/oder behandelter Ackerboden weist unter anderem eine hohe Ungleichmäßigkeit hinsichtlich der Verdichtung bzw. Rückverfestigung des Ackerbodens auf. Die Verdichtung des Ackerbodens ist hierbei typischerweise in einem mittleren Bereich eines vom Reifen resultierenden Bearbeitungsstreifens ausgeprägter, insbesondere höher, als an den seitlichen Enden, insbesondere am Rand, des jeweiligen Bearbeitungsstreifens. Insbesondere resultiert dies aus dem verhältnismäßig großen Abstand zweier hintereinander angeordneter Stollenelemente im Bereich des seitlichen Endes, insbesondere am Rand, des Reifens. Eine entsprechende Vergrößerung der Geometrie und/oder der Anzahl an Stollenelementen ist hierbei jedoch nicht ohne weiteres möglich, da dadurch die Verdichtung des Ackerbodens durch den Reifen zu stark zunimmt, so dass Niederschlag in Form von Wasser nicht ausreichend in tiefere Bodenschichten eindringen und/oder einsickern kann. Die ungleichmäßige Verdichtung wirkt sich außerdem negativ auf den Gasaustausch, insbesondere den Luftaustausch, zwischen den verhältnismäßig besonders unterschiedlich stark verdichteten Bodenschichten und/oder den vorbereiteten Reihen zur Verteilgutablage aus.

Neben der Verdichtung des Ackerbodens sind darüber hinaus auch die ungleichmäßigen Tiefen- und/oder Höhenverhältnisse des bearbeiteten Ackerbodens und/oder die unzureichende Verteilung der unterschiedlichen Bodenzusammensetzungen (Anteil Feinerde) für die Ablage des Verteilguts unvorteilhaft.

Die der Erfindung zugrunde liegende Aufgabe besteht somit darin, einen Reifen für eine landwirtschaftliches Sä- und/oder Bodenbearbeitungsgerät so zu gestalten, dass die Gleichmäßigkeit des bearbeiteten und/oder behandelten Ackerbodens, insbesondere des Saatbetts, weiter verbessert wird. Insbesondere die für das Verteilgut und/oder die nachlaufenden Bodenbearbeitungswerkzeuge reihenbezogene Vor- und/oder Nachbereitung des Ackerbodens, insbesondere Saatbetts, soll weiter verbessert werden.

Diese Aufgabe wird erfindungsgemäß dadurch gelöst, dass das zumindest eine Stollenelement wenigstens einen einem ersten seitlichen Ende der Lauffläche zugewandten ersten Außenabschnitt aufweist der zumindest abschnittsweise korrespondierend, insbesondere zumindest nahezu parallel, zur Laufrichtung ausgebildet ist.

In Folge dieser Maßnahme ist eine gesteigerte Verdichtung bzw. Rückverfestigung des Ackerbodens im Bereich des seitlichen Endes, insbesondere am Rand, des Bearbeitungsstreifens erreichbar, während insbesondere die Verdichtung zur Mitte des Bearbeitungsstreifens zumindest im Wesentlichen nicht weiter gesteigert wird. Hieraus resultiert eine besonders gleichmäßige Verdichtung des Ackerbodens.

Der erste Außenabschnitt weist bevorzugt eine Längsrichtung auf, die zumindest in etwa zur Laufrichtung korrespondiert, wobei eine Längsrichtung des Querabschnitts quer, insbesondere schräg und/oder angewinkelt, zur Laufrichtung ausgerichtet ist. Ferner bevorzugt ist ein zumindest abschnittsweise in und/oder entgegen der Laufrichtung erstreckender Außenabschnitt des Stollenelements. Eine in Längsrichtung gerichtete Erstreckung, insbesondere Länge, des ersten Außenabschnitts beträgt vorzugsweise etwa ein Viertel bis zu einem Drittel einer in Längsrichtung des Querabschnitts gerichteten Erstreckung, insbesondere Länge, des Querabschnitts. Durch ein derartiges Verhältnis der Erstreckungen, insbesondere Längen, ist eine besonders gleichmäßige Verdichtung des bearbeiteten Ackerbodens erreichbar. In einer alternativen oder zusätzlichen Ausführungsform kann die Erstreckung des ersten Außenabschnitts auch kleiner als ein Viertel der längs gerichteten Erstreckung des Querabschnitts sein. In einer weiteren alternativen Ausführungsform kann die Länge des Außenabschnitts auch etwa die halbe Länge des Querabschnitts aufweisen.

Der Außenabschnitt ist vorzugsweise angewinkelt zum Querabschnitt ausgebildet, wobei ein zwischen dem Außenabschnitt und dem Querabschnitt eingeschlossener rechter oder stumpfer Winkel besonders bevorzugt ist.

Das wenigstens eine Stollenelement weist ferner bevorzugt zumindest einen den Außenabschnitt mit dem Querabschnitt verbindenden Übergang auf, wobei ein zumindest nahezu nahtloser und/oder absatzfreier Übergang besonders bevorzugt ist. Die verhältnismäßig feine bzw. lockere und von dem Reifen verdrängte Bodenzusammensetzung, insbesondere Feinerde, wird durch einen derartigen Übergang besonders gut entlang des Stollenelements in Richtung des Außenabschnitts geführt und/oder geleitet. In einer hierzu alternativen Ausführungsform kann das Stollenelement auch zumindest teilweise oder nahezu vollständig zwischen dem Außenabschnitt und dem Querabschnitt unterbrochen sein.

In einer bevorzugten Ausführungsform des erfindungsgemäßen Reifens weist das Stollenelement wenigstens einen Innenabschnitt auf, der in Laufrichtung gesehen seitlich gegenüberliegend zum ersten Außenabschnitt, und insbesondere von dem ersten seitlichen Ende der Lauffläche abgewandt, angeordnet ist, wobei der Innenabschnitt vorzugsweise zumindest teilweise spiegelsymmetrisch zum ersten Außenabschnitt ausgebildet ist. Das Stollenelement ist bevorzugt in Bezug auf eine Schnittebene, die insbesondere zumindest im Wesentlichen senkrecht zur Längsrichtung des Querabschnitts ausgerichtet ist, spiegelsymmetrisch ausgebildet. Bevorzugt ist der erste Außenabschnitt an einem ersten, insbesondere äußeren, Enden des Querabschnitts und der Innenabschnitt an einem zweiten, insbesondere inneren, Ende des Querabschnitts angeordnet. Das Stollenelement ist hierbei quer zur Laufrichtung gesehen vorzugsweise im Wesentlichen Z-förmig ausgebildet. Aufgrund der zumindest nahezu gleichen Eindringung, insbesondere hinsichtlich der Eindringtiefe und/oder der Eindringgeometrie, des Außen- und Innenabschnitts in den Ackerboden, ist somit eine besonders gleichmäßige Verdichtung erreichbar.

In einer Weiterbildung des erfindungsgemäßen Reifens weist das Stollenelement wenigstens einen zweiten Außenabschnitt auf der in Laufrichtung gesehen zumindest abschnittsweise in eine zum ersten Außenabschnitt entgegengesetzten Richtung erstreckend ausgebildet ist, wobei der zweite Außenabschnitt vorzugsweise neben dem ersten Außenabschnitt, insbesondere zum ersten seitlichen Ende der Lauffläche hin, angeordnet ist. Der zweite Außenabschnitt ist, insbesondere quer zur Laufrichtung gesehen, besonders bevorzugt zwischen dem ersten seitlichen Ende der Lauffläche und dem ersten Außenabschnitt angeordnet. Vorzugsweise ist das Stollenelement hierbei quer zur Laufrichtung gesehen im Wesentlichen Y-förmig ausgebildet. In einer hierzu alternativen oder zusätzlichen Ausführungsform ist der zweite Außenabschnitt an einem Ende des ersten Außenabschnitts angeordnet und als ein entgegen der Laufrichtung erstreckender Fortsatz des ersten Außenabschnitts ausgebildet.

In einer anderen bevorzugten Ausführungsform des erfindungsgemäßen Reifens ist eine, insbesondere äußere, Seitenfläche des ersten Außenabschnitts, insbesondere des zweiten Außenabschnitts, zumindest nahezu in einer, insbesondere senkrechten, Ebene mit dem ersten seitlichen Ende der Lauffläche angeordnet. In einer ferner bevorzugten Ausführungsform weist der Reifen zumindest eine vom seitlichen Ende, insbesondere Rand, der Lauffläche ausgehend in radialer Richtung nach innen ausgebildete Flanke auf. Die äußere Seitenfläche des ersten und/oder zweiten Außenabschnitts bildet hierbei vorzugsweise zumindest nahezu eine Ebene mit der wenigstens einen Flanke des Reifens. Mit anderen Worten ist die, insbesondere äußere, Seitenfläche des ersten und/oder zweiten Außenabschnitts planar zur Flanke ausgebildet. Mittels einer derartigen Ausführungsform ist eine entsprechende Verdichtung des Ackerbodens bis zum äußersten seitlichen Ende, insbesondere Rand, des Bearbeitungsstreifens erreichbar.

In einer anderen Weiterbildung des erfindungsgemäßen Reifens umfasst der Reifen wenigstens eine erste und zweite umlaufende Stollenreihe, wobei jede Stollenreihe eine Mehrzahl von Stollenelementen aufweist, und wobei vorzugsweise die Stollenelemente der ersten Stollenreihe in Laufrichtung zumindest teilweise alternierend, insbesondere versetzt, zu den Stollenelementen der zweiten Stollenreihe angeordnet sind. Vorzugsweise ist wenigstens ein Innabschnitt der wenigstens einen ersten Stollenreihe wenigstens einem, insbesondere seitlich gegenüberliegenden, Innenabschnitt der wenigstens einen zweiten Stollenreihe zugewandt. Die einander zugewandten Innenabschnitte der beiden Stollenreihen sind ferner bevorzugt zumindest nahezu unmittelbar aneinander angeordnet.

Darüber hinaus ist ein Reifen bevorzugt, bei dem wenigstens eine Stollenreihe zwischen zehn und zwanzig, vorzugsweise sechzehn oder achtzehn hintereinander angeordnete, Stollenelemente aufweist. Diese Anzahl an Stollenelementen weist ein für die Verdichtung bzw. Rückverfestigung und/oder die Verteilung des Ackerbodens besonders günstiges Verhältnis auf.

In einer weiteren bevorzugten Ausführungsform des erfindungsgemäßen Reifens weist der Reifen einen zwischen den Stollenreihen ausgebildeten Mittenabstand auf, wobei der Reifen entlang des Mittenabstands zumindest nahezu frei von Stollenelementen, insbesondere Innenabschnitten, ausgebildet ist. Im inneren und/oder mittleren Bereich des Reifens wird somit ein, insbesondere ringförmig umlaufender, Ausschnitt nach Art einer Nut gebildet. Die Innenabschnitte der wenigstens einen ersten Stollenreihe sind hierbei quer zur Laufrichtung gesehen beabstandet zu den Innenabschnitten der wenigstens einen zweiten Stollenreihe angeordnet. Der Mittenabstand, insbesondere der Abstand zwischen den Innenabschnitten, beträgt vorzugsweise zumindest in etwa dem einfachen oder doppelten einer Breite oder Dicke eines einzelnen Innenabschnitts.

In einer weiteren Weiterbildung des erfindungsgemäßen Reifens ist der erste Außenabschnitt eines ersten Stollenelementes in Laufrichtung gesehen zumindest teilweise seitlich gegenüberliegend zum Innenabschnitt eines zweiten, insbesondere zumindest teilweise davor oder dahinter angeordneten, Stollenelementes angeordnet. Vorzugsweise ist in Laufrichtung gesehen hinter einem Innenabschnitt eines ersten Stollenelements beabstandet ein Innenabschnitt eines zweiten Stollenelements angeordnet. Ebenso bevorzugt ist hinter einem Außenabschnitt des ersten Stollenelements beabstandet ein Außenabschnitt des zweiten Stollenelements angeordnet. Durch eine derartige Anordnung der Stollenelemente werden zwischen den hintereinander angeordneten Innen- und/oder Außenabschnitten in etwa quer zur Laufrichtung, insbesondere korrespondierend zum Querabschnitt, ausgerichtete Profilkanäle gebildet die dazu eingerichtet sind, den innerhalb des Bearbeitungsstreifens zumindest teilweise aufgelockerten und/oder verdrängten Ackerboden, insbesondere die Feinerde, in einer definierten Richtung zu führen. Durch die zwischen den Außenabschnitten gebildeten Profilkanäle wird der Ackerboden zum ersten seitlichen Ende und/oder aus der Lauffläche heraus ausgegeben und/oder ausgeworfen. Durch die zwischen den Innenabschnitten gebildeten Profilkanäle wird der Ackerboden zum zweiten seitlichen Ende und/oder aus der Lauffläche heraus ausgegeben und/oder ausgeworfen. Durch eine derartige Ausführungsform ist eine reihenbezogene Verteilung des Ackerbodens erreichbar, sodass ein zur Ablage des Verteilguts vorgesehener Streifen des Ackerbodens besonders vorteilhaft vorbereitet wird.

Bei einer besonders bevorzugten Ausführungsform entspricht ein Querschnitt der Profilkanäle zumindest in etwa der Seitenfläche der Außenabschnitte. In einer alternativen aber ebenso bevorzugten Ausführungsform kann der Querschnitt der Profilkanäle auch etwa zwischen einem oder zwei Drittel der Seitenfläche der Außenabschnitte betragen.

Darüber hinaus ist ein erfindungsgemäßer Reifen bevorzugt, bei dem eine von einer Drehachse des Reifens ausgehende, insbesondere maximale, radiale Höhe des Außenabschnitts zumindest in etwa einer radialen Höhe des Innenabschnitts entspricht. Mit anderen Worten entspricht hierbei der Umfang des Reifens im Bereich des Außenabschnitts, insbesondere der Außenabschnitte, zumindest im Wesentlichen dem Umfang des Reifens im Bereiche des Innenabschnitts, insbesondere der Innenabschnitte. Der Umfang oder die maximale radiale Höhe des Reifens ist somit zumindest nahezu konstant ausgebildet. Eine Eindringtiefe der Stollenelemente in den Ackerboden ist hierbei über zumindest nahezu alle Abschnitte im Wesentlichen gleich, wodurch eine besonders gleichmäßige Verdichtung des Ackerbodens erreicht ist. Ausgehend von der Mitte oder dem Inneren der Lauffläche, ist die Lauffläche, insbesondere mit einem ersten Krümmungsradius, bevorzugt zu den seitlichen Enden hin abfallend ausgebildet. Der bevorzugt quer zur Laufrichtung ausgebildete Krümmungsradius der Lauffläche entspricht zumindest im etwa dem Einfachen oder einem Vielfachen der Gesamthöhe des Reifens. Alternativ oder zusätzlich ist die radiale Höhe der Stollenelemente zu den seitlichen Enden hin abfallend ausgebildet wobei ein bevorzugt quer zur Laufrichtung ausgerichteter zweiter Krümmungsradius der Stollenelemente zumindest in etwa dem Doppelten oder einem Vielfachen des ersten Krümmungsradius der Lauffläche entspricht.

In einer anderen bevorzugten Ausführungsform des erfindungsgemäßen Reifens weist der erste Außenabschnitt, insbesondere der Innenabschnitt, zumindest eine, vorzugsweise schlitzartige, Ausnehmung auf, wobei die Ausnehmung vorzugsweise zumindest teilweise korrespondierend, insbesondere zumindest nahezu parallel, zur Laufrichtung ausgebildet ist. Insbesondere eine Längsrichtung der Ausnehmung ist korrespondierend zu einer Längsrichtung des Außenabschnitts und/oder des Innenabschnitts ausgerichtet. Die Ausnehmung ist vorzugsweise dazu eingerichtet, den bearbeitbaren Ackerboden, insbesondere die Feinerde, im Bereich der Außenabschnitte, insbesondere der Innenabschnitte, in einer zur Ablage des Verteilguts geeigneten Weise zu portionieren und/oder zu positionieren. Die Höhe bzw. Dicke der Ausnehmung beträgt bevorzugt in etwa einem Viertel bis zu drei Viertel der Höhe des Stollenelements, insbesondere des Außen- und/oder Innenabschnitts. Ferner bevorzugt ist eine Breite der Ausnehmung mit etwa einem Viertel bis maximal etwa einer halben Breite des Außen- und/oder Innenabschnitts ausgebildet. Eine Länge der Ausnehmung entspricht zumindest in etwa der gesamten Länge des Außen- und/oder Innenabschnitts. Die Ausnehmung ist besonders bevorzugt ausgehend von einer Stirnseite des Außen- und/oder Innenabschnitts bis zu einem Übergang zum Querabschnitt erstreckend ausgebildet. Alternativ oder zusätzlich ist auch eine Ausnehmung denkbar, bei der die Länge in etwa der halben Länge des Außen- und/oder Innenabschnitts entspricht. Darüber hinaus ist die Ausnehmung, insbesondere quer zur Laufrichtung gesehen, bevorzugt zumindest nahezu mittig am Außen- und/oder Innenabschnitt, insbesondere zwischen den jeweiligen Seitenflächen des Außen- und/oder Innenabschnitts, angeordnet.

Bei einer besonders bevorzugten Ausführungsform des erfindungsgemäßen Reifens sind die Innenabschnitte zweier gegenüberliegender Stollenreihen zumindest teilweise und zumindest nahezu unmittelbar aneinander angeordnet, wobei ein von zumindest zwei aneinander angeordneter Innenabschnitte gebildeter Zwischenraum zumindest in etwa der wenigstens einen, vorzugsweise schlitzartigen, Ausnehmung entspricht. Die Abmessungen des gebildeten Zwischenraums entsprechen bevorzugt zumindest in etwa den Abmessungen, insbesondere der Tiefe, Breite und/oder Länge, zumindest einer an den Außen- und/oder Innenabschnitten angeordneten Ausnehmung. Die gegenüberliegenden Seitenflächen der Innenabschnitte sind bevorzugt zumindest teilweise oder alternativ vollständig aneinander angeordnet.

Der Reifen ist darüber hinaus bevorzugt an einem festen Radelement nach Art einer Reifenfelge angeordnet. In einer hierzu alternativen Ausführungsform kann der wenigstens eine Reifen auch an einem, vorzugsweise zylindrischen, Radelement nach Art einer Walze angeordnet sein. Ferner bevorzugt ist der Reifen von innen mit Luft beaufschlagbar ausgebildet, wobei ein Reifen aus Vollmaterial ebenso denkbar ist.

Die der Erfindung zugrunde liegende Aufgabe wird ebenso mit einem landwirtschaftlichen Sä- und/oder Bodenbearbeitungsgerät mit wenigstens einer unterteilten Walze nach Art eines Reifenpackers gelöst, wobei die Walze wenigstens einen Reifen umfasst der nach zumindest einem der vorgenannten Ausführungsformen des erfindungsgemäßen Reifens ausgebildet ist. Hinsichtlich der Vorteile und Modifikationen des erfindungsgemäßen landwirtschaftlichen Sä- und/oder Bodenbearbeitungsgeräts wird zunächst auf die Vorteile und Modifikationen des erfindungsgemäßen Reifens verwiesen.

In einer besonders bevorzugten Weiterbildung des erfindungsgemäßen Sä- und/oder Bodenbearbeitungsgeräts umfasst die Walze zumindest zwei mit einem Zwischenabstand zueinander benachbart angeordneter Reifen, wobei der Mittenabstand zumindest eines Reifens zumindest in etwa dem Zwischenabstand entspricht.

Darüber hinaus umfasst das Sä- und/oder Bodenbearbeitungsgerät bevorzugt eine Mehrzahl von mit dem Boden in Eingriff bringbaren Scharen, wobei der Walze, insbesondere dem wenigstens einen Reifen, wenigstens ein Schar zugeordnet ist. Besonders bevorzugt sind einem jeweiligen Reifen wenigstens zwei oder bis zu vier Schare zugeordnet. Das wenigstens eine Schar ist dabei in Fahrtrichtung gesehen vorzugsweise hinter der Walze, insbesondere dem wenigstens einen Reifen, angeordnet.

Bei einer weiteren besonders bevorzugten Ausführungsform des erfindungsgemäßen Sä- und/oder Bodenbearbeitungsgeräts ist die wenigstens eine Ausnehmung in Laufrichtung gesehen korrespondierend, insbesondere zumindest nahezu in einer Flucht, zum Schar ausgebildet. Bevorzugt wird innerhalb jeder Stollenreihe zumindest eine Reihe von hintereinander angeordneten Außen- und/oder Innenabschnitten mit Ausnehmungen gebildet, wobei jeder Reihe von Außen- und/oder Innenabschnitten mit Ausnehmungen ein Schar zugeordnet ist.

Weitere Einzelheiten der Erfindung sind der Beispielsbeschreibung und den Zeichnungen zu entnehmen. Die Zeichnungen zeigen
- Fig.1: eine Ausführungsvariante eines landwirtschaftlichen Sä- und/oder Bodenbearbeitungsgeräts in ausschnittsweiser Perspektivansicht von hinten;
- Fig.2: mehrere Sä- und/oder Bodenbearbeitungswerkzeuge des in Fig.1 dargestellten Sä- und/oder Bodenbearbeitungsgeräts in vergrößerter Draufsicht;
- Fig.3A: eine erste Ausführungsvariante eines erfindungsgemäßen Reifens in einer Ansicht entgegen der Laufrichtung;
- Fig.3B: der Reifen aus der Fig.3A in einer perspektivischen Seitenansicht;
- Fig.4A: eine zweite Ausführungsvariante des erfindungsgemäßen Reifens in einer Ansicht entgegen der Laufrichtung;
- Fig.4B: der Reifen aus der Fig.4A in einer perspektivischen Seitenansicht;
- Fig.5A: eine dritte Ausführungsvariante des erfindungsgemäßen Reifens in einer Ansicht entgegen der Laufrichtung; und
- Fig.5B: der Reifen aus der Fig.5A in einer perspektivischen Seitenansicht.

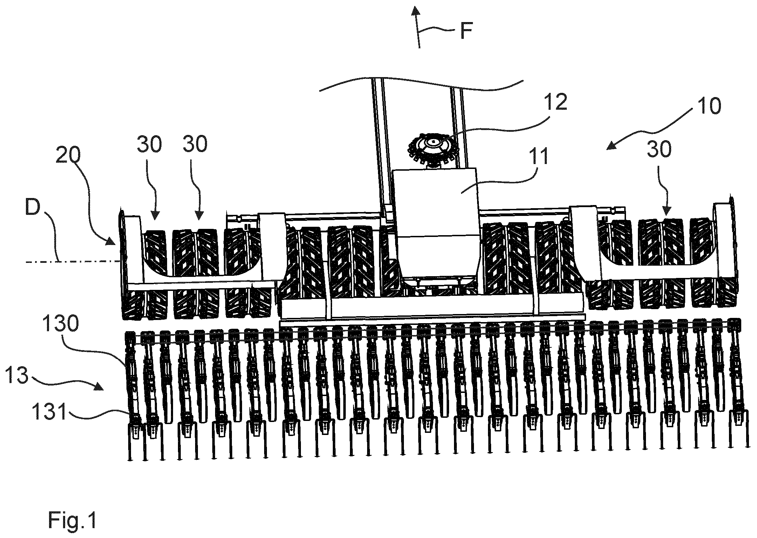

Ein Sä- und/oder Bodenbearbeitungsgerät 10 zum Ausbringen, insbesondere Ablegen, von körnigem Verteilgut und/oder zum Bearbeiten und/oder Behandeln eines Ackerbodens einer landwirtschaftlichen Nutzfläche ist in der Fig.1 gezeigt. Das dargestellte Sä- und/oder Bodenbearbeitungsgerät 10 ist als eine landwirtschaftliche Bestellkombination ausgebildet und umfasst zumindest eine unterteilte Walze 20 nach Art eines Reifenpackers und mehrere in Fahrtrichtung F dahinter angeordnete Verteilgutablageeinrichtungen 13. Das Sä- und/oder Bodenbearbeitungsgerät 10 umfasst ferner zumindest einen zentralen Vorratsbehälter 11 und ein Verteilgutfördersystem welches wenigstens einen Verteilerkopf 12 aufweist und dazu eingerichtet ist, das Verteilgut ausgehend vom Vorratsbehälter 11 über nicht gezeigte Förderleitungen den jeweiligen Verteilgutablageeinrichtungen 13 bedarfsgerecht zuzubringen. Das Verteilgut kann je nach Bedarf als Saatgut und/oder Dünger ausgeführt sein. Die Verteilgutablageeinrichtung 13 umfasst hierbei beispielhaft Furchenöffnungselemente 130 die als Scheibenschare ausgeführt sind, Tiefenführungselemente 131 nach Art einer Fang- und/oder Andruckrolle, sowie Vorrichtungen zum Schließen der Furche.

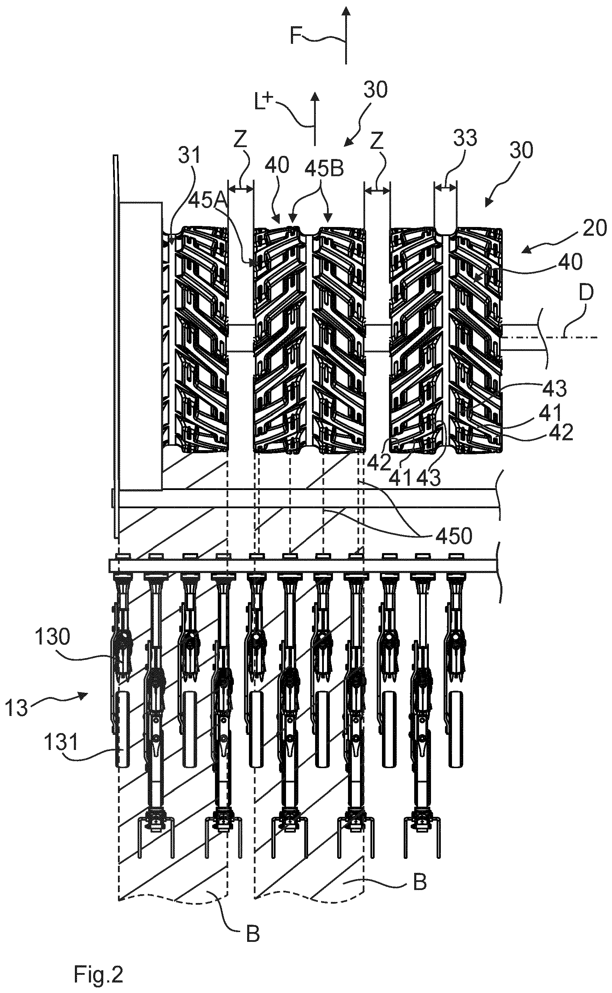

Damit der Ackerboden, insbesondere das Saatbett, möglichst gleichmäßig zur Ablage des Verteilguts vor- und/oder nachbereitet wird, sind die Verteilgutablageeinrichtungen 13 einem jeweiligen in Fahrtrichtung F davor angeordneten Reifen 30 zugeordnet, wie in der Fig.2 gut zu sehen ist. Einem jeweiligen Reifen können, wie hier beispielhaft dargestellt, bis zu vier Verteilgutablageeinrichtungen 13, insbesondere Furchenöffnungselemente 130, zugeordnet sein, wobei alternativ hierzu auch mehr als vier zugeordnete Verteilgutablageeinrichtungen 13 denkbar sind. Die Reifen 30 sind quer zur Fahrtrichtung F und mit einem Zwischenabstand Z zueinander beabstandet angeordnet. Die Reifen 30 sind ferner um jeweils eine Drehachse D drehbar am Sä- und/oder Bodenbearbeitungsgerät angeordnet und dazu eingerichtet, den Ackerboden an den entsprechenden Stellen, insbesondere reihenbezogen innerhalb eines Bearbeitungsstreifens B, für die Ablage des Verteilguts vor- und/oder nachzubereiten, insbesondere zu verdichten, zu vermischen, zu zerkleinern und/oder, insbesondere die Bodenzusammensetzung bzw. den Anteil der Feinerde, zu verteilen. Die dargestellten Bearbeitungsstreifen B repräsentieren einen vom jeweiligen Reifen 30 während des Arbeitsvorgangs bearbeiteten und/oder überfahrenen Bereich der Nutzfläche und/oder des Ackerbodens.

Je nach Bedarf können derartige Reifen 30 zumindest teilweise mit Luft befüllbar oder alternativ aus einem, insbesondere Kunststoff- und/oder Elastomeren-, Vollmaterial ausgebildet sein. Der gattungsgemäß zumindest teilweise elastisch ausgebildete Reifen 30 ist je nach Ausführungsvariante über ein festes Radelement das nach Art einer Reifenfelge oder einer, insbesondere zylinderförmigen, Walze ausgebildet ist, mit dem Sä- und/oder Bodenbearbeitungsgerät 10 verbindbar.

Um den jeweiligen Anforderungen während der Bearbeitung und/oder Behandlung des Ackerbodens gerecht zu werden, weist ein derartiger Reifen 30 ein entsprechend abgestimmtes und/oder ausgebildetes Reifenprofil auf. Der Reifen 30 umfasst hierbei neben wenigstens einer in einer, insbesondere frei wählbaren, Laufrichtung L+, L- des Reifens 30 abrollbaren, insbesondere umlaufenden, Lauffläche 31, außerdem eine Mehrzahl von Stollenelementen 40, die insbesondere in radialer Richtung mit einer Profilhöhe erstreckend ausgebildet sind. Die Stollenelemente 40 sind zwischen zwei gegenüberliegenden seitlichen Enden 31A, 31B der Lauffläche 31 und in Laufrichtung L+, L- zumindest teilweise hintereinander angeordnet. Die Stollenelemente 40 weisen einen Querabschnitt 41 auf, welcher im Wesentlichen quer, insbesondere schräg und/oder angewinkelt, zur Laufrichtung L+, L- ausgebildet ist.

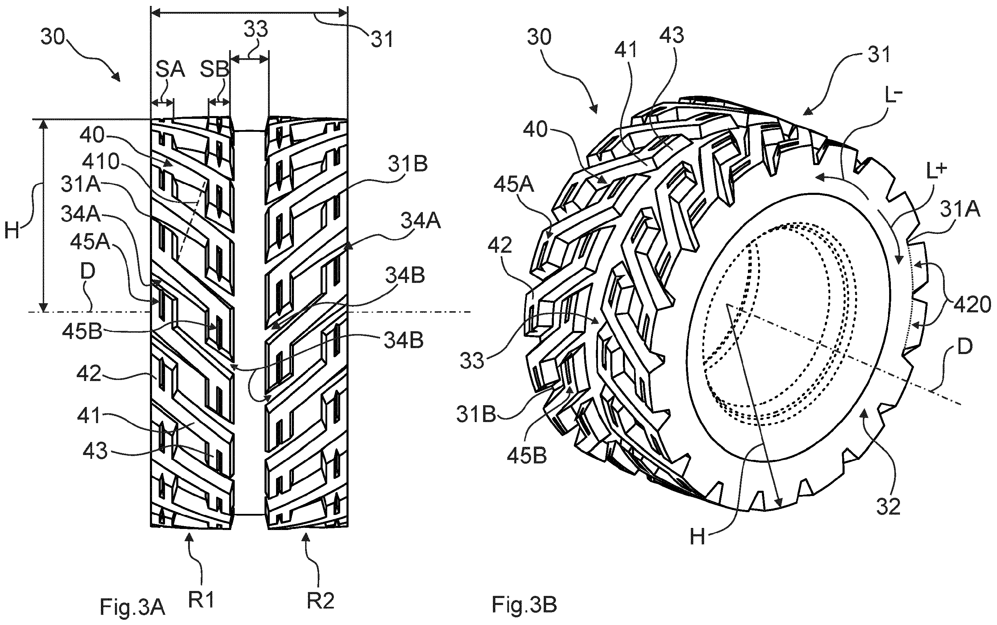

Die in den Fig.1 und 2 abgebildeten Reifen können insbesondere nach zumindest einer der in den Fig.3A bis 5B gezeigten erfindungsgemäßen Varianten ausgebildet sein. Bei der in den Fig.3A und 3B in Einzelansicht gezeigten ersten Reifenvariante, weisen die Stollenelemente 40 einen dem ersten seitlichen Ende 31A der Lauffläche 31 zugewandten ersten Außenabschnitt 42 auf der zumindest abschnittsweise, insbesondere zumindest nahezu parallel, zur Laufrichtung L+, L-ausgebildet ist. Das erste seitliche Ende 31A der Lauffläche 31 und eine äußere Seitenfläche 420 des ersten Außenabschnitts 42 bilden hierbei eine im Wesentlichen vertikale Ebene. Die Seitenfläche 420 ist somit zumindest teilweise planar zu einer zwischen der Lauffläche 31 und dem festen Radelement ausgebildeten Flanke 32 angeordnet.

Darüber hinaus weisen die Stollenelemente 40 wenigstens einen Innenabschnitt 43 auf, der in Laufrichtung L+, L- gesehen seitlich gegenüberliegend zum ersten Außenabschnitt 42, und insbesondere von dem ersten seitlichen Ende 31A der Lauffläche abgewandt, angeordnet ist. Der Innenabschnitt 43 ist in dieser Ausführungsvariante in Bezug auf eine zumindest nahezu senkrecht zum Querabschnitt 41 ausgerichtete Schnittebene 410 spiegelsymmetrisch zum ersten Außenabschnitt 42 ausgebildet. Des Weiteren ist der erste Außenabschnitt 42 eines ersten Stollenelementes 40 in Laufrichtung L+, L- gesehen zumindest teilweise seitlich gegenüberliegend zum Innenabschnitt 43 zumindest eines anderen, insbesondere zumindest teilweise davor oder dahinter angeordneten, Stollenelementes 40 angeordnet.

Wie in den Abbildungen gezeigt, weist der Reifen 30 darüber hinaus wenigstens eine erste und zweite umlaufende Stollenreihe R1, R2 auf, wobei jede der Stollenreihen R1, R2 eine Mehrzahl von Stollenelementen 40 umfasst. Innerhalb einer Stollenreihe R1, R2 ist in Laufrichtung L+, L- gesehen hinter und/oder vor einem Innenabschnitt 43 eines ersten Stollenelements 40 beabstandet ein Innenabschnitt 43 eines anderen Stollenelements 40 angeordnet. Ebenso ist hinter und/oder vor einem Außenabschnitt 42 des ersten Stollenelements 40 beabstandet ein Außenabschnitt 42 eines anderen Stollenelements 40 angeordnet. Durch die jeweiligen beabstandeten Innen- und/oder Außenabschnitte 42, 43 werden somit quer zur Laufrichtung L+, L- und korrespondierend zum Querabschnitt 41 ausgerichtete Profilkanäle 34A, 34B gebildet die dazu eingerichtet sind, den innerhalb des Bearbeitungsstreifens B zumindest teilweise aufgelockerten und/oder verdrängten Ackerboden, insbesondere die Feinerde, in einer definierten Richtung entlang des Reifenprofils zu führen.

Darüber hinaus sind Stollenelemente 40 der ersten Stollenreihe R1 seitlich gegenüberliegend und in Laufrichtung L+, L- zumindest teilweise alternierend, insbesondere versetzt, zu den Stollenelementen 40 der zweiten Stollenreihe R2 angeordnet. In einer alternativen, jedoch nicht gezeigten, Ausführungsvariante können die Stollenelemente 40 der unterschiedlichen Stollenreihen R1, R2 auch vollständig bzw. genau gegenüberliegend und somit nicht versetzt zueinander angeordnet sein. Die ersten Außenabschnitte 42 der zweiten Stollenreihe R2 sind hierbei einem zweiten seitlichen Ende 31B der Lauffläche 31 zugewandt, während die Innenabschnitte 43 der zweiten Stollenreihe R2 von dem zweiten seitlichen Ende 31B abgewandt angeordnet sind.

In der in den Fig.3A und 3B gezeigten Ausführungsvariante ist entlang der Lauffläche 31 zwischen den gegenüberliegenden Stollenreihen R1, R2 ein Mittenabstand 33 ausgebildet der zumindest nahezu frei von Stollenelementen 40, insbesondere Innenabschnitten 43, ist. Das Profil des Reifens 30 wird innerhalb dieses Bereichs oder Abstands ausschließlich von der Lauffläche 31 gebildet. Der Mittenabstand 33 eines Reifens 30 entspricht zumindest in etwa dem Zwischenabstand Z zu einem dazu benachbart angeordneten Reifen 30. Der Mittenabstand 33, insbesondere der Abstand zwischen den Innenabschnitten 43, entspricht ferner zumindest in etwa dem einfachen oder doppelten einer Breite SB des Innenabschnitts 43.

Sowohl die Außen- als auch Innenabschnitte 42 eines Reifens weisen ferner eine, insbesondere schlitzartige, Ausnehmung 45A, 45B auf. Die Ausnehmungen 45A, 45B sind korrespondierend, insbesondere zumindest nahezu parallel, zur Laufrichtung L+, L- ausgebildet und dazu eingerichtet, den innerhalb des Bearbeitungsstreifens B bearbeiteten Ackerboden beim Überfahren an den zur Ablage des Verteilguts geeigneten Stellen zu formen und/oder zu positionieren. Hierfür sind die Ausnehmungen 45A, 45B in Laufrichtung L+, L-, insbesondere in Fahrtrichtung F, gesehen korrespondierend, insbesondere zumindest nahezu in einer Flucht 450 zum Furchenöffnungselement 130, insbesondere Schar, ausgebildet. Darüber hinaus weisen die an den jeweiligen Innen- und/oder Außenabschnitten 42, 43 ausgebildeten Ausnehmungen 45A, 45B jeweils eine Breite auf, die in etwa einem Viertel der Breite SA, SB des jeweiligen Außen- und/oder Innenabschnitts 42, 43 entspricht. Alternativ hierzu kann die Breite der Ausnehmung auch bis zu einer halben Breite SA, SB des jeweiligen Außen- und/oder Innenabschnitts 42, 43 entsprechen.

Darüber hinaus entspricht eine in Bezug zur der Drehachse D, insbesondere maximale, radiale Höhe H der Außenabschnitte 42 zumindest in etwa einer, insbesondere maximalen, radialen Höhe der Innenabschnitte 43. Die radiale Höhe H der Außenabschnitte 42 kann alternativ auch zumindest abschnittsweise abfallend zum seitlichen Ende 31A, 31B hin ausgebildet sein.

Die Stollenelemente 40 sind in dieser Ausführungsvariante in Laufrichtung L+, L-gesehen zumindest im Wesentlich nach Art eines Z ausgebildet.

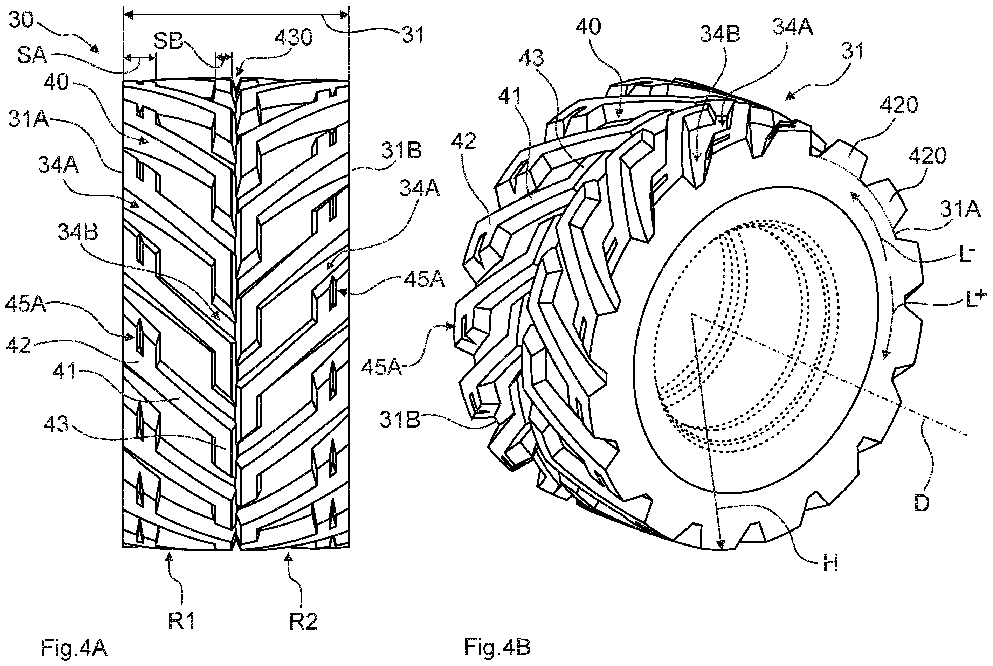

Eine erfindungsgemäße zweite Ausführungsvariante des Reifens 30 ist in den Fig.4A und 4B gezeigt. Die Geometrie der Innenabschnitte 43 unterscheidet sich hierbei zumindest teilweise von der Geometrie der Außenabschnitte 42. Die gegenüberliegenden Innenabschnitte 43 der jeweiligen Stollenreihen R1, R2 sind im mittleren Bereich der Lauffläche 31 zumindest teilweise und unmittelbar aneinander angeordnet. Ein von zumindest zwei aneinander angeordneter Innenabschnitte 43 gebildeter Zwischenraum 430 entspricht hierbei, insbesondere in seinen Abmessungen, zumindest in etwa den an den Außenabschnitten 42 ausgebildeten schlitzartigen Ausnehmungen 45A. Dem hier gezeigten Reifen 30 sind ferner bis zu drei Verteilgutablageeinrichtungen 13 zuordenbar, wobei den Ausnehmungen 45A beider Stollenreihen R1, R2 und den Zwischenräumen 430 jeweils ein Furchenöffnungselemente 130 zugeordnet werden kann. Die Breite SB der Innenabschnitte 43 entspricht hierbei zumindest in etwa der halben Breite SA der Außenabschnitte 42.

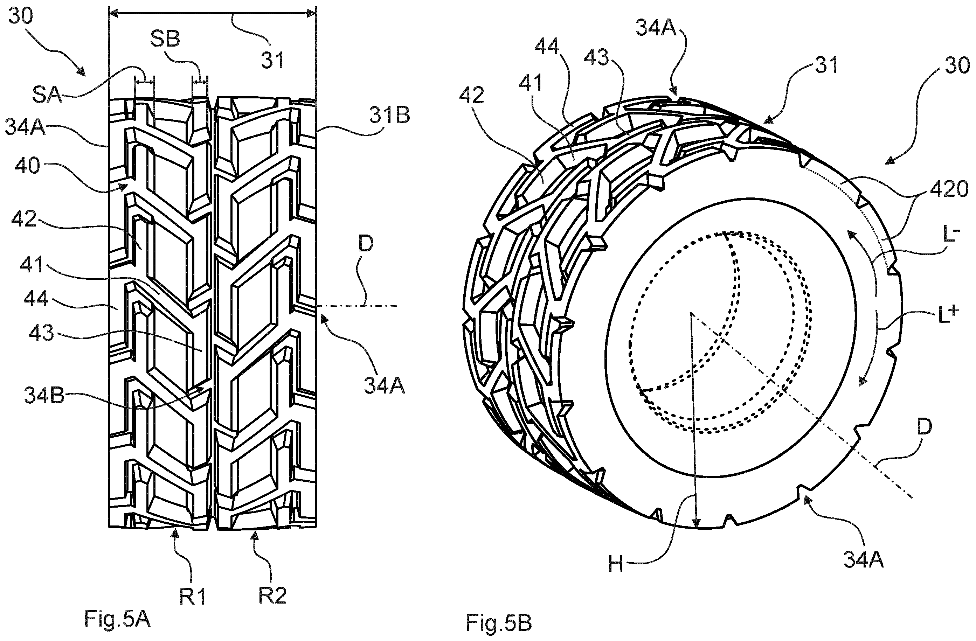

In den Fig.5A und 5B ist eine erfindungsgemäße dritte Ausführungsvariante des Reifens 30 gezeigt. Die Stollenelemente 40 umfassen hierbei jeweils wenigstens einen zweiten Außenabschnitt 44 der in Laufrichtung L+, L- gesehen zumindest abschnittsweise in eine zum ersten Außenabschnitt 42 entgegengesetzten Richtung erstreckend ausgebildet ist. Der zweite Außenabschnitt 44 ist dabei ferner neben dem ersten Außenabschnitt 42 zum jeweiligen seitlichen Ende 31A, 31B hin angeordnet. Bei der ersten Stollenreihe R1 ist der zweite Außenabschnitt 44 zwischen dem ersten Außenabschnitt 42 und dem ersten seitlichen Ende 31A angeordnet. Bei der zweiten Stollenreihe R2 ist der zweite Außenabschnitt 44 zwischen dem ersten Außenabschnitt 42 und dem zweiten seitlichen Ende 31B angeordnet. Die Stollenelemente 40 sind in dieser Ausführungsvariante in Laufrichtung L+, L- gesehen zumindest im Wesentlich nach Art eines Y ausgebildet.

Darüber hinaus ist hierbei der zweite Außenabschnitt 44 eines ersten Stollenelements 40 zumindest abschnittsweise mit einem Abstand seitlich gegenüberliegend und zu einem ersten Außenabschnitt 42 eines anderen, insbesondere davor oder dahinter, angeordneten Stollenelements 40 angeordnet. Der seitliche Abstand zwischen dem ersten und zweiten Außenabschnitt 42, 44 entspricht zumindest in etwa der Größe der Profilkanäle 43A, 43B.

### Bezugszeichenliste

- 10: landwirtschaftliches Sä- und/oder Bodenbearbeitungsgerät
- 11: Vorratsbehälter
- 12: Verteilerkopf
- 13: Verteilgutablageeinrichtung
- 130: Furchenöffnungselement
- 131: Tiefenführungselement
- 20: Walze
- 30: Reifen
- 31: Lauffläche
- 31A: erstes seitliches Ende der Lauffläche
- 31B: zweites seitliches Ende der Lauffläche
- 32: Flanke
- 33: Mittenabstand
- 34A, 34B: Profilkanal
- 40: Stollenelement
- 41: Querabschnitt
- 410: Schnittebene
- 42: erster Außenabschnitt
- 420: Seitenfläche
- 43: Innenabschnitt
- 430: Zwischenraum
- 44: zweiter Außenabschnitt
- 45A, 45B: Ausnehmung
- 450: Flucht zwischen Ausnehmung und Verteilgutablageeinrichtung

- B: Bearbeitungsstreifen
- D: Drehachse
- F: Fahrtrichtung
- H: radiale Höhe
- L+: erste Laufrichtung
- L-: zweite Laufrichtung
- R1: erste Stollenreihe
- R2: zweite Stollenreihe
- SA: Breite Außenabschnitt
- SB: Breite Innenabschnitt
- Z: Zwischenabstand

## Patentansprüche

1. Reifen (30) für ein landwirtschaftliches Sä- und/oder Bodenbearbeitungsgerät (10), umfassend
- wenigstens eine in einer Laufrichtung (L+, L-) des Reifens (30) abrollbaren, insbesondere umlaufende, Lauffläche (31),
- eine Mehrzahl von Stollenelementen (40) die zwischen zwei gegenüberliegenden seitlichen Enden (31A, 31B) der Lauffläche (31) und in Laufrichtung (L+, L-) zumindest teilweise hintereinander angeordnet sind, wobei zumindest ein Stollenelement (40) wenigstens einen Querabschnitt (41) aufweist der im Wesentlichen quer zur Laufrichtung (L+, L-) ausgebildet ist, **dadurch gekennzeichnet, dass** das zumindest eine Stollenelement (40) wenigstens einen einem ersten seitlichen Ende (31A) der Lauffläche (31) zugewandten ersten Außenabschnitt (42) aufweist, der zumindest abschnittsweise korrespondierend, insbesondere zumindest nahezu parallel, zur Laufrichtung (L+, L-) ausgebildet ist.

2. Reifen (30) nach Anspruch 1, **dadurch gekennzeichnet, dass** das Stollenelement (40) wenigstens einen Innenabschnitt (43) aufweist der in Laufrichtung (L+, L-) gesehen seitlich gegenüberliegend zum ersten Außenabschnitt (42), und insbesondere von dem ersten seitlichen Ende (31A) der Lauffläche (31) abgewandt, angeordnet ist, wobei der Innenabschnitt (43) vorzugsweise zumindest teilweise spiegelsymmetrisch zum ersten Außenabschnitt (42) ausgebildet ist.

3. Reifen (30) nach zumindest einem der vorgenannten Ansprüche, **dadurch gekennzeichnet, dass** das Stollenelement (40) wenigstens einen zweiten Außenabschnitt (44) aufweist, der in Laufrichtung (L+, L-) gesehen zumindest abschnittsweise in eine zum ersten Außenabschnitt (42) entgegengesetzten Richtung erstreckend ausgebildet ist, wobei der zweite Außenabschnitt (44) vorzugsweise neben dem ersten Außenabschnitt (42), insbesondere zum ersten seitlichen Ende (31A) der Lauffläche (31) hin, angeordnet ist.

4. Reifen (30) nach zumindest einem der vorgenannten Ansprüche 1 bis 3, **dadurch gekennzeichnet, dass** eine Seitenfläche (420) des ersten Außenabschnitts (42) zumindest nahezu in einer, insbesondere senkrechten, Ebene mit dem ersten seitlichen Ende (31A) der Lauffläche (31) angeordnet ist.

5. Reifen (30) nach Anspruch 3, **dadurch gekennzeichnet, dass** eine Seitenfläche (420) des zweiten Außenabschnitts (44) zumindest nahezu in einer, insbesondere senkrechten, Ebene mit dem ersten seitlichen Ende (31A) der Lauffläche (31) angeordnet ist.

6. Reifen (30) nach zumindest einem der vorgenannten Ansprüche 1 bis 5, **gekennzeichnet durch** wenigstens eine erste und zweite umlaufende Stollenreihe (R1, R2), wobei jede Stollenreihe (R1, R2) eine Mehrzahl von Stollenelementen (40) aufweist, und wobei vorzugsweise die Stollenelemente (40) der ersten Stollenreihe (R1) in Laufrichtung (L+, L-) zumindest teilweise alternierend, insbesondere versetzt, zu den Stollenelementen (40) der zweiten Stollenreihe (R2) angeordnet sind.

7. Reifen (30) nach Anspruch 6, **gekennzeichnet durch** einen zwischen den Stollenreihen (R1, R2) ausgebildeten Mittenabstand (33), wobei der Reifen (30) entlang des Mittenabstands (33) zumindest nahezu frei von Stollenelementen (40), insbesondere Innenabschnitten (43), ausgebildet ist.

8. Reifen (30) nach zumindest einem der vorgenannten Ansprüche 6 und 7, **dadurch gekennzeichnet, dass** der erste Außenabschnitt (42) eines ersten Stollenelementes (40) in Laufrichtung (L+, L-) gesehen zumindest teilweise seitlich gegenüberliegend zum Innenabschnitt (43) eines zweiten, insbesondere zumindest teilweise davor oder dahinter angeordneten, Stollenelementes (40) angeordnet ist.

9. Reifen (30) nach Anspruch 2 und zumindest einem der Ansprüche 3 bis 8, **dadurch gekennzeichnet, dass** eine von einer Drehachse (D) des Reifens (30) ausgehende, insbesondere maximale, radiale Höhe (H) des Außenabschnitts (42) zumindest in etwa einer radialen Höhe (H) des Innenabschnitts (43) entspricht.

10. Reifen (30) nach zumindest einem der vorgenannten Ansprüche 1 bis 9, **dadurch gekennzeichnet, dass** der erste Außenabschnitt (42) zumindest eine, vorzugsweise schlitzartige, Ausnehmung (45A, 45B) aufweist, wobei die Ausnehmung (45A, 45B) vorzugsweise zumindest teilweise korrespondierend, insbesondere zumindest nahezu parallel, zur Laufrichtung (L+, L-) ausgebildet ist.

11. Reifen (30) nach Anspruch 2 und zumindest einem der Ansprüche 3 bis 9, **dadurch gekennzeichnet, dass** der Innenabschnitt (43) zumindest eine, vorzugsweise schlitzartige, Ausnehmung (45A, 45B) aufweist, wobei die Ausnehmung (45A, 45B) vorzugsweise zumindest teilweise korrespondierend, insbesondere zumindest nahezu parallel, zur Laufrichtung (L+, L-) ausgebildet ist.

12. Reifen (30) nach den Ansprüchen 2, 6 und 10, **dadurch gekennzeichnet, dass** die Innenabschnitte (43) zweier gegenüberliegender Stollenreihen (R1, R2) zumindest teilweise und zumindest nahezu unmittelbar aneinander angeordnet sind, wobei ein von zumindest zwei aneinander angeordneter Innenabschnitte (43) gebildeter Zwischenraum (430) zumindest in etwa der wenigstens einen, vorzugsweise schlitzartigen, Ausnehmung (45A, 45B) entspricht.

13. Landwirtschaftliches Sä- und/oder Bodenbearbeitungsgerät (10) mit wenigstens einer unterteilten Walze (20) nach Art eines Reifenpackers, **dadurch gekennzeichnet, dass** die Walze (20) wenigstens einen Reifen (30) umfasst der nach zumindest einem der vorgenannten Ansprüche 1 bis 12 ausgebildet ist.

14. Sä- und/oder Bodenbearbeitungsgerät (10) nach Anspruch 13, **dadurch gekennzeichnet, dass** die Walze (20) zumindest zwei mit einem Zwischenabstand (Z) zueinander benachbart angeordnete Reifen (30) umfasst, wobei die Reifen (30) nach Anspruch 7 ausgebildet sind, und wobei der Mittenabstand (33) zumindest eines Reifens (30) zumindest in etwa dem Zwischenabstand (Z) entspricht.

15. Sä- und/oder Bodenbearbeitungsgerät (10) nach zumindest einem der vorgenannten Ansprüche 13 und/oder 14, mit zumindest einem der Walze (20), insbesondere dem Reifen (30) zugeordneten Schar (130), **dadurch gekennzeichnet, dass** der Reifen (30) nach Anspruch 10, 11 und/oder 12 ausgeführt ist, und dass die wenigstens eine Ausnehmung (45A, 45B) in Laufrichtung (L+, L-) gesehen korrespondierend, insbesondere zumindest nahezu in einer Flucht (450), zum Schar (130) ausgebildet ist.

## Claims

1. Tire (30) for an agricultural sowing and/or soil-working device (10), comprising
- at least one tread (31) which can be rolled, in particular circumferentially, in a running direction (L+, L-) of the tire (30),
- a plurality of stud elements (40) which are arranged at least partially one behind the other between two opposite lateral ends (31A, 31B) of the tread (31) and in the running direction (L+, L-), at least one stud element (40) having at least one transverse portion (41) which is formed substantially transversely to the running direction (L+, L-), **characterized in that** the at least one stud element (40) has at least a first outer portion (42) which faces a first lateral end (31A) of the tread (31) and is formed, at least in portions, so as to correspond, in particular be at least almost parallel, to the running direction (L+, L-).

2. Tire (30) according to claim 1, **characterized in that** the stud element (40) has at least one inner portion (43) which, when viewed in the running direction (L+, L-), is arranged laterally opposite the first outer portion (42), and in particular facing away from the first lateral end (31A) of the tread (31), the inner portion (43) preferably being formed at least partially mirror-symmetrically to the first outer portion (42).

3. Tire (30) according to at least one of the preceding claims, **characterized in that** the stud element (40) has at least a second outer portion (44) which, when viewed in the running direction (L+, L-), is formed, at least in portions, so as to extend in a direction opposite the first outer portion (42), the second outer portion (44) preferably being arranged next to the first outer portion (42), in particular toward the first lateral end (31A) of the tread (31).

4. Tire (30) according to at least one of the preceding claims 1 to 3, **characterized in that** a side surface (420) of the first outer portion (42) is arranged at least almost in one, in particular vertical, plane with the first lateral end (31A) of the tread (31).

5. Tire (30) according to claim 3, **characterized in that** a side surface (420) of the second outer portion (44) is arranged at least almost in one, in particular vertical, plane with the first lateral end (31A) of the tread (31).

6. Tire (30) according to at least one of the preceding claims 1 to 5, **characterized by** at least a first and second circumferential row of studs (R1, R2), each row of studs (R1, R2) having a plurality of stud elements (40), and the stud elements (40) of the first row of studs (R1) preferably being arranged in the running direction (L+, L-) so as to at least partially alternate, in particular be offset, with respect to the stud elements (40) of the second row of studs (R2).

7. Tire (30) according to claim 6, **characterized by** a center distance (33) formed between the rows of studs (R1, R2), the tire (30) being formed along the center distance (33) so as to be at least almost free of stud elements (40), in particular inner portions (43).

8. Tire (30) according to at least one of the preceding claims 6 and 7, **characterized in that** the first outer portion (42) of a first stud element (40), when viewed in the running direction (L+, L-), is arranged at least partially laterally opposite the inner portion (43) of a second stud element (40) which is in particular arranged at least partially in front of or behind it.

9. Tire (30) according to claim 2 and at least one of claims 3 to 8, **characterized in that** a radial height (H), in particular a maximum radial height, of the outer portion (42), starting from an axis of rotation (D) of the tire (30), corresponds at least approximately to a radial height (H) of the inner portion (43).

10. Tire (30) according to at least one of the preceding claims 1 to 9, **characterized in that** the first outer portion (42) has at least one, preferably slot-like, recess (45A, 45B), the recess (45A, 45B) preferably being formed so as to at least partially correspond, in particular be at least almost parallel, to the running direction (L+, L-).

11. Tire (30) according to claim 2 and at least one of claims 3 to 9, **characterized in that** the inner portion (43) has at least one, preferably slot-like, recess (45A, 45B), the recess (45A, 45B) preferably being formed so as to at least partially correspond, in particular be at least almost parallel, to the running direction (L+, L-).

12. Tire (30) according to claims 2, 6 and 10, **characterized in that** the inner portions (43) of two opposite rows of studs (R1, R2) are arranged at least partially and at least almost directly next to one another, an intermediate space (430) formed by at least two inner portions (43) arranged next to one another corresponding at least approximately to the at least one, preferably slot-like, recess (45A, 45B).

13. Agricultural sowing and/or soil-working device (10) having at least one divided roller (20) in the manner of a tire packer, **characterized in that** the roller (20) comprises at least one tire (30) which is designed according to at least one of the preceding claims 1 to 12.

14. Sowing and/or soil-working device (10) according to claim 13, **characterized in that** the roller (20) comprises at least two tires (30) which are adjacent to one another with a spacing (Z), the tires (30) being designed according to claim 7, and the center distance (33) of at least one tire (30) corresponding at least approximately to the spacing (Z).

15. Sowing and/or soil-working device (10) according to at least one of the preceding claims 13 and/or 14, comprising at least one plowshare (130) which is associated with the roller (20), in particular with the tire (30),
**characterized in that** the tire (30) is designed according to claim 10, 11 and/or 12, **and in that** the at least one recess (45A, 45B) is formed, when viewed in the running direction (L+, L-), so as to correspond to, in particular be at least almost in alignment (450) with, the plowshare (130).

## Revendications

1. Pneu (30) pour un semoir et/ou un appareil de travail du sol (10) agricoles, comprenant
- au moins une bande de roulement (31), en particulier circonférentielle, pouvant rouler dans une direction de roulement (L+, L-) du pneu (30),
- une pluralité d'éléments formant crampons (40) qui sont disposés entre deux extrémités latérales (31A, 31B) opposées de la bande de roulement (31) et au moins partiellement les uns derrière les autres dans la direction de roulement (L+, L-), dans lequel au moins un élément formant crampon (40) présente au moins une section transversale (41) qui est réalisée de manière sensiblement transversale à la direction de roulement (L+, L-),
**caractérisé en ce que** l'au moins un élément formant crampon (40) présente au moins une première section extérieure (42) tournée vers une première extrémité latérale (31A) de la bande de roulement (31), laquelle première section extérieure est réalisée au moins dans certaines sections de manière correspondante, en particulier au moins pratiquement parallèle, à la direction de roulement (L+, L-).

2. Pneu (30) selon la revendication 1, **caractérisé en ce que** l'élément formant crampon (40) présente au moins une section intérieure (43) qui, vue dans la direction de roulement (L+, L-), est disposée latéralement à l'opposé de la première section extérieure (42), et en particulier à l'opposé de la première extrémité latérale (31A) de la bande de roulement (31), dans lequel la section intérieure (43) est de préférence réalisée au moins partiellement en symétrie spéculaire par rapport à la première section extérieure (42).

3. Pneu (30) selon au moins l'une des revendications précédentes, **caractérisé en ce que** l'élément formant crampon (40) présente au moins une seconde section extérieure (44) qui, vue dans la direction de roulement (L+, L-), s'étend au moins dans certaines sections dans une direction opposée à la première section extérieure (42), dans lequel la seconde section extérieure (44) est de préférence disposée à côté de la première section extérieure (42), en particulier vers la première extrémité latérale (31A) de la bande de roulement (31).

4. Pneu (30) selon au moins l'une des revendications précédentes 1 à 3, **caractérisé en ce qu'**une surface latérale (420) de la première section extérieure (42) est disposée au moins pratiquement dans un plan, en particulier perpendiculaire, comportant la première extrémité latérale (31A) de la bande de roulement (31).

5. Pneu (30) selon la revendication 3, **caractérisé en ce qu'**une surface latérale (420) de la seconde section extérieure (44) est disposée au moins pratiquement dans un plan, en particulier perpendiculaire, comportant la première extrémité latérale (31A) de la bande de roulement (31).

6. Pneu (30) selon au moins l'une des revendications précédentes 1 à 5, **caractérisé par** au moins une première et une seconde rangée de crampons (R1, R2) circonférentielle, dans lequel chaque rangée de crampons (R1, R2) présente une pluralité d'éléments formant crampons (40), et dans lequel les éléments formant crampons (40) de la première rangée de crampons (R1) sont de préférence disposés dans la direction de roulement (L+, L-) au moins partiellement en alternance, en particulier décalés, par rapport aux éléments formant crampons (40) de la seconde rangée de crampons (R2).

7. Pneu (30) selon la revendication 6, **caractérisé par** un espacement central (33) réalisé entre les rangées de crampons (R1, R2), dans lequel le pneu (30) est réalisé de manière au moins pratiquement exempte d'éléments formant crampons (40), en particulier de sections intérieures (43), le long de l'espacement central (33).

8. Pneu (30) selon au moins l'une des revendications précédentes 6 et 7, **caractérisé en ce que** la première section extérieure (42) d'un premier élément formant crampon (40) est disposé, vu dans la direction de roulement (L+, L-), au moins partiellement latéralement à l'opposé de la section intérieure (43) d'un second élément formant crampon (40), en particulier disposé au moins partiellement devant ou derrière celui-ci.

9. Pneu (30) selon la revendication 2 et au moins l'une des revendications 3 à 8, **caractérisé en ce qu'**une hauteur radiale (H), en particulier maximale, de la section extérieure (42), partant d'un axe de rotation (D) du pneu (30), correspond au moins approximativement à une hauteur radiale (H) de la section intérieure (43).

10. Pneu (30) selon au moins l'une des revendications précédentes 1 à 9, **caractérisé en ce que** la première section extérieure (42) présente au moins un évidement (45A, 45B), de préférence en forme de fente, dans lequel l'évidement (45A, 45B) est de préférence réalisé au moins partiellement en correspondance avec la direction de roulement (L+, L-), en particulier au moins pratiquement parallèlement à celle-ci.

11. Pneu (30) selon la revendication 2 et au moins l'une des revendications 3 à 9, **caractérisé en ce que** la section intérieure (43) présente au moins un évidement (45A, 45B), de préférence en forme de fente, dans lequel l'évidement (45A, 45B) est de préférence réalisé au moins partiellement en correspondance avec la direction de roulement (L+, L-), en particulier au moins pratiquement parallèlement à celle-ci.

12. Pneu (30) selon les revendications 2, 6 et 10, **caractérisé en ce que** les sections intérieures (43) de deux rangées de crampons (R1, R2) opposées sont disposées au moins partiellement et au moins pratiquement directement l'une contre l'autre, dans lequel un espace intermédiaire (430) formé par au moins deux sections intérieures (43) disposées l'une contre l'autre correspond au moins approximativement à l'au moins un évidement (45A, 45B), de préférence en forme de fente.

13. Semoir et/ou appareil de travail du sol (10) agricoles comportant au moins un rouleau (20) subdivisé à la manière d'un tasse-avant à pneus,
**caractérisés en ce que** le rouleau (20) comprend au moins un pneu (30) qui est réalisé selon au moins l'une des revendications précédentes 1 à 12.

14. Semoir et/ou appareil de travail du sol (10) selon la revendication 13, **caractérisés en ce que** le rouleau (20) comprend au moins deux pneus (30) disposés à proximité l'un de l'autre avec un espacement intermédiaire (Z), dans lesquels les pneus (30) sont réalisés selon la revendication 7, et dans lesquels l'espacement central (33) d'au moins un pneu (30) correspond au moins approximativement à l'espacement intermédiaire (Z).

15. Semis et/ou appareil de travail du sol (10) selon au moins l'une des revendications précédentes 13 et/ou 14, comportant au moins un soc (130) associé au rouleau (20), en particulier au pneu (30), **caractérisés en ce que** le pneu (30) est réalisé selon la revendication 10, 11 et/ou 12, **et en ce que** l'au moins un évidement (45A, 45B), vu dans la direction de roulement (L+, L-), est réalisé en correspondance avec le soc (130), en particulier au moins pratiquement dans un alignement (450).
